(19) Europäisches Patentamt / European Patent Office / Office européen des brevets

(11) **EP 1 517 293 B1**

(12) **EUROPÄISCHE PATENTSCHRIFT**

(45) Veröffentlichungstag und Bekanntmachung des Hinweises auf die Patenterteilung:
**11.07.2007  Patentblatt 2007/28**

(51) Int Cl.:
***G09G 3/38*** *(2006.01)*

(21) Anmeldenummer: **04021400.9**

(22) Anmeldetag: **09.09.2004**

(54) **Verfahren zur elektrischen Ansteuerung von elektrochromen Elementen**

Process for the electric control of electrochromic elements

Procédé de contrôle életrique de vitrage électrochrome

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.09.2003  DE 10343445**
**07.08.2004  DE 102004038515**

(43) Veröffentlichungstag der Anmeldung:
**23.03.2005  Patentblatt 2005/12**

(73) Patentinhaber: **Gesimat GmbH, Gesellschaft für intelligente Materialen, und Technologien 12555 Berlin (DE)**

(72) Erfinder:
• **Kraft, Alexander**
  **12557 Berlin (DE)**
• **Franz, Sepp**
  **14532 Kleinmachnow (DE)**
• **Rottmann, Matthias**
  **15827 Blankenfelde (DE)**
• **Heckner, Karl-Heinz**
  **12557 Berlin (DE)**

(56) Entgegenhaltungen:
**EP-A- 0 445 720          DE-A- 19 706 918**
**US-A- 5 231 531          US-B1- 6 222 177**

## Beschreibung

Die Erfindung betrifft ein Verfahren zur elektrischen Ansteuerung von elektrochromen Anordnungen, mit dessen Hilfe es möglich ist die Lichtdurchlässigkeit dieser elektrochromen Elemente stufenlos reproduzierbar zu steuern. Das Verfahren ermöglicht durch die dynamische Anpassung der Schaltspannung an sich ändernde Widerstände im System und an sich ändernde Schaltströme auch eine starke Beschleunigung des Schaltvorganges von elektrochromen Elementen mit hohen inneren Widerständen aufgrund grosser Flächen und/oder vergleichsweise niedrig leitfähiger Elektrolyte, ohne zu Stabilitätseinbußen zu führen.

Mit Elektrochromie wird die reversible Farbänderung von Materialien bezeichnet, welche durch das Fließen eines elektrischen Stromes und/oder das Anlegen einer elektrischen Spannung ausgelöst wird. Es gibt eine Vielzahl elektrochromer Substanzen aus verschiedenen Substanzklassen, z. B. Metalloxide (Beispiel: Wolframoxid), anorganische Komplexverbindungen (Beispiel: Preußisch Blau) oder elektronisch leitfähige organische Polymere (Beispiel: Polyanilin). Allen ist gemeinsam, dass sie in unterschiedlichen Oxidationszuständen verschieden gefärbt sind und dass man zwischen diesen Oxidationszuständen reversibel durch elektrochemische Oxidation bzw. Reduktion schalten kann. Für die meisten in Frage kommenden praktischen Anwendungen bevorzugt man Substanzen, die mindestens zwischen einem ungefärbten und einem gefärbten Zustand schaltbar sind.

Zur praktischen Nutzung des Effektes der Elektrochromie werden elektrochrome Anordnungen oder Elemente verwendet, in denen die elektrisch gesteuerte Modulation des einfallenden Lichtes für verschiedene Anwendungszwecke, wie z.B. für Gebäude- und

Fahrzeugverglasungen mit automatisch veränderbarer Lichtdurchlässigkeit (intelligente Fenster), großflächige Displays, schaltbare optische Filter für Kameras, Mikroskope usw. oder auch für automatisch abblendbare Autorückspiegel eingesetzt wird.

In elektrochromen Anordnungen befinden sich die elektrochromen Materialien zwischen zwei Elektroden von denen mindestens eine (z.B. bei Displays oder Spiegeln) oder beide (z.B. bei intelligenten Fenstern oder schaltbaren optischen Filtern) transparent sind. Die elektrochromen Substanzen können sich als Film auf den Elektroden befinden und/oder im Elektrolyten gelöst vorliegen. Die Erfindung bezieht sich auf elektrochrome Anordnungen mit festen elektrochromen Schichten, zwischen denen sich ein Elektrolyt befindet. Diese Variante elektrochromer Elemente hat einen batterieähnlichen Aufbau und zeigt dementsprechend auch ein batterieähnliches elektrisches Verhalten, d.h. ein Stromfluss muss nur während der Lade- und Entladevorgänge, die Färbung und Entfärbung entsprechen, erfolgen. Der Stromfluss zur Änderung der Lichtdurchlässigkeit der elektrochromen Anordnungen wird nach dem Stand der Technik in der Regel durch Anlegen einer zeitlich konstanten Gleichspannung hervorgerufen, wobei die Polarität zwischen Färbung und Entfärbung gewechselt wird.

Der Aufbau eines solchen elektrochromen Elementes kann wie folgt schematisch dargestellt werden:

Substrat 1 / TCO / $EC_1$ / Elektrolyt / $EC_2$ / TCO / Substrat 2

,wobei mit TCO die transparenten leitfähigen Schichten und mit $EC_1$ und $EC_2$ die beiden elektrochemisch schaltbaren, elektrochromen Schichten bezeichnet werden. $EC_1$ kann z.B. aus Wolframoxid oder Polyethylendioxythiophen und $EC_2$ beispielsweise aus Preussisch Blau, Polyanilin oder Nickeloxid bestehen. Die Kombination einer elektrochromen Schicht $EC_1$ mit einer ihre Farbe bei der Schaltung nicht ändernden sogenannten Ionenspeicherschicht (an Stelle von $EC_2$) ist ebenfalls möglich.

Bei elektrochromen Elementen wird als Elektrolyt oft ein möglichst mechanisch stabiler polymerer Festelektrolyt (wie z.B. in EP1227362 beschrieben) vorgeschlagen, um ein belastungsfähiges, z.B. in der Gebäudeverglasung praktisch einsetzbares elektrochromes Element zu erhalten. Solche polymeren Festelektrolyte bestehen in der Regel aus mindestens einem geeigneten Polymer, mindestens einem Weichmacher und mindestens einem Leitsalz so wie gegebenenfalls weiteren Zusätzen, wie z.B. UV-Absorbern, Füllstoffen oder Antioxidantien. Die Ionenleitfähigkeit solcher polymerer Festelektrolyte ist um mehrere Größenordnungen schlechter als die von flüssigen Elektrolyten. Je größer der Polymeranteil im Festelektrolyten, desto besser sind seine mechanischen Eigenschaften umso schlechter ist aber seine Ionenleitfähigkeit. Typischerweise beträgt die Ionenleitfähigkeit von flüssigen Elektrolyten bestehend aus einem hochsiedenden organischen Lösungsmittel wie zum Beispiel γ-Butyrolacton und einem Lithiumsalz wie zum Beispiel Lithiumperchlorat um $10^{-2}$ S/cm bei +25°C. Die Ionenleitfähigkeit eines polymeren Festelektrolyten, z.B. einer ionenleitenden PVB-Folie, wie in WO02/40578 beschrieben, beträgt dagegen nur um $10^{-5}$ S/cm bei +25°C. Diese stark verringerte Ionenleitfähigkeit von polymeren Festelektrolyten gegenüber flüssigen Elektrolyten führt zu einer starken Verringerung der Schaltgeschwindigkeit von elektrochromen Anordnungen, wenn sie mit den nach dem Stand der Technik bekannten Verfahren zur elektrischen Ansteuerung von elektrochromen Elementen betrieben werden.

Es sind nach dem Stand der Technik verschiedene Varianten von Verfahren zur elektrischen Ansteuerung von elektrochromen Elementen bekannt.

Im einfachsten Fall erfolgen Färbung und Entfärbung durch Anlegen einer zeitlich konstanten Gleichspannung, die meist zwischen 0,5 und 3 V liegt und deren Polarität zwischen Färbe-und Entfärbevorgängen gewechselt wird. Um den Absorptionsgrad der elektrochromen Elemente stufenlos einzustellen zu können, wurden verschiedene Verfahren vorgeschlagen. So ist in EP78464 eine optische Regelschaltung für elektrochrome Elemente beschrieben, bei der die Absorption des elektrochromen Elementes laufend optisch gemessen wird, das Signal mit einem vorgegebenen Wert verglichen und danach elektrische Ladungen dem Element zu- oder aus dem Element abgeführt werden, bis der gemessene optische Absorptionsgrad dem Sollwert entspricht. Ein solches Verfahren ist aber aufwendig, insbesondere da zur Messung eine Lichtquelle und ein Detektor an den gegenüberliegenden Seiten des elektrochromen Elementes angebracht werden müssen.

In DE3142909 ist eine kontinuierliche Ladungssteuerung für elektrochrome Schichten beschrieben, bei der die stufenlose Einstellung des Absorptionsgrades über das Zählen der elektrischen Ladungen, die der elektrochromen Schicht zugeführt oder entnommen werden, erfolgt. Dieses Verfahren stellt eine wesentliche Verbesserung gegenüber der optischen Messung des Absorptionsgrades dar, da die Ladungszählung direkt in die elektronische Schaltung integriert werden kann. Allerdings wird in DE3142909 auch ausgesagt, dass für die Entfärbevorgänge kleinere Ladungsmengen entnommen werden, als beim Färben zugeführt wurden. Eine dauerhaft reversible Schaltung ist jedoch nur möglich wenn die Ladungsmengen für Färbung und Entfärbung möglichst gleich groß sind.

In WO02/17008 sind eine Methode und eine Vorrichtung zur ladungs- und temperaturkontrollierten Schaltung elektrochromer Elemente beschrieben. Dabei wird die Temperatur des elektrochromen Elementes über einen Temperatursensor gemessen, zum Schalten wird dann eine temperaturabhängige Spannung angelegt und ausserdem wird der Schaltvorgang über die fließende elektrische Ladungsmenge kontrolliert.

In EP445720 sind ein Verfahren und eine Anordnung zum Anlegen einer elektrischen Betriebsspannung an ein elektrooptisches Schichtsystem beschrieben, mit dem Ziel der schnelleren Schaltung von elektrochromen Elementen. Diese beschleunigte Schaltung wird dadurch erreicht, dass bei Beginn des Schaltprozesses eine höhere Spannung als die eigentlich maximal zulässige innere Potentialdifferenz zwischen den beiden transparenten Leitschichten angelegt wird, um den Spannungsabfall in diesen Leitschichten zu kompensieren. Am Ende des Schaltvorganges wird wieder die ansonsten übliche Spannung angelegt. Dabei kann der Verlauf der Spannung zeitgesteuert sein und an eine vorgegebene Spannungs-Zeit-Kurve angepasst werden oder es erfolgt die Messung einer inneren Potentialdifferenz direkt zwischen gegenüberliegenden Stellen der elektrochromen Schichten (ein vorher festgelegter Grenzwert darf hier nicht überschritten werden). Eine ähnliche Technik ist in der US-Patentschrift US5124833 beschrieben. Mit diesen Methoden kann zwar der Spannungsabfall in den transparenten Leitschichten, nicht aber der oft beträchtliche Spannungsabfall im Elektrolyten kompensiert werden.

In DE19706918 ist ebenfalls ein Verfahren zum Betreiben eines elektrochromen Elementes beschrieben. Dabei wird in einer Anlaufphase des Umfärbevorganges die Spannung stetig bis maximal zu einem temperaturabhängigen Endwert erhöht bzw. erniedrigt, wobei die Spannung abhängig vom Strom geführt wird. Die maximal zulässige Schaltspannung $U_{max}$ hängt dabei linear von der Element temperatur nach $U_{max} = A - B \cdot T$ ab. A und B sind für das verwendete System charakteristische Konstanten und experimentell zu ermitteln. Die Temperaturabhängigkeit der Schaltspannung wird durch die starke Temperaturabhängigkeit der Leitfähigkeit des polymeren Festelektrolyten hervorgerufen. Diese ist jedoch real nicht linear von der Temperatur abhängig, sondern gehorcht einem komplizierteren Zusammenhang, der sogenannten Vogel-Tamann-Fulcher-Beziehung. Eine lineare Temperaturabhängigkeit ist deshalb nur als Näherung für kleine Temperaturintervalle zulässig. Wenn sie über größere Temperaturbereiche angewandt wird, führt das im Langzeitbetrieb zur irreversiblen Zerstörung der elektrochromen Elemente. Aufwendig ist auch die notwendige experimentelle Ermittlung der Konstanten A und B. Für eine temperaturangepasste Ansteuerspannung muss eine Messung der Elementtemperatur erfolgen. Diese kann nach DE19839748 mittels eines Temperaturfühlers, welcher im Bereich des Abstandshalters des elektrochromen Isolierglases angeordnet ist, geschehen. Das bedeutet aber einen zusätzlichen Aufwand bei der Herstellung und erhöht die Kosten einer elektrochromen Verglasung.

Der Stand der Technik lässt sich also wie folgt zusammenfassen: Es ist bekannt, dass elektrochrome Elemente stufenlos über eine optische Kontrolle des Absorptionsgrades oder über die Kontrolle der geflossenen elektrischen Ladungen geschaltet werden können. Prinzipiell ist damit jeder optische Zwischenzustand einstellbar. Des weiteren ist bekannt, eine temperaturabhängige zeitlich unveränderliche Ansteuerspannung zu verwenden, wobei meist eine linear von der Temperatur abhängige Spannung verwendet wird und eine Messung der Temperatur notwendig ist. Eine Beschleunigung der Schaltung größerer elektrochromer Elemente durch Erhöhung der Ansteuerspannung als Kompensation des Spannungsabfalls der transparenten leitfähigen Schichten ist ebenfalls bekannt.

Nachteilig bei diesem beschriebenen Stand der Technik ist vor allem, dass damit die geringe Schaltgeschwindigkeit elektrochromer Elemente bei Verwendung mechanisch sehr stabiler, aber mit vergleichsweise niedriger Ionenleitfähigkeit ausgestatteter Polymerfestelektrolyte nicht erhöht werden kann.

Eine Aufgabe der Erfindung besteht deshalb vor allem darin, ein neuartiges Verfahren zur elektrischen Ansteuerung von elektrochromen Elementen anzugeben, bei dem durch eine dynamische Änderung der Ansteuerspannung während der Schaltung nicht nur die Spannungsabfälle in den transparenten Leitschichten sondern auch der Spannungsabfall im Festelektrolyten zwischen den elektrochromen Schichten kompensiert werden kann.

Dadurch können elektrochrome Elemente mit polymeren Festelektrolyten prinzipiell genauso schnell geschaltet werden, wie elektrochrome Elemente mit flüssigen Elektrolyten ohne die Dauerstabilität des Systems zu gefährden. Ziel der vorliegenden Erfindung ist es weiterhin, eine einfache Methoden der Kontrolle der Färbungstiefe elektrochromer Elemente zu liefern.

Überraschenderweise wurde gefunden, dass eine bisher nicht erreichte Beschleunigung der Schaltgeschwindigkelt elektrochromer Elemente mit vergleichsweise schlecht leitenden Polymerfestelektrolyen und/oder mit relativ hohen Widerständen der TCO-Schichten aufgrund der Größe der elektrochromen Elemente erreicht werden kann, indem die Gleichspannung zur Färbung $U_{Schalt, Färbung}$ und die Gleichspannung zur Entfärbung $U_{Schalt,Entfärbung}$ des Elementes jeweils aus 2 Teilspannungen $U_1$ und $U_2$ zusammengesetzt werden, wobei die Tellspannung $U_2$ dynamisch an den bei der Schaltung fließenden Strom I und an den stark temperaturabhängigen elektrischen Widerstand des elektrochromen Elementes R angepasst wird.

Wichtig für eine dauerhaft reproduzierbare Schaltung elektrochromer Elemente ist auch die Kontrolle Ihres Färbungsgrades, die nach dem Stand der Technik über eine optische Messung bzw. über die Kontrolle und Speicherung der beim Schalten geflossenen Landungen erfolgt. Überraschenderweise wurde gefunden, dass die Färbungstiefe bzw. die Menge der injizierten Ladungen der Leerlaufspannung $U_{Leerlauf}$ des elektrochromen Elementes proportional sind. Demzufolge erfolgt erfindungsgemäß die stufenlose Schaltung über die Kontrolle der Leerlaufspannung. Dazu wird der Schaltvorgang in kurzzeitig aufeinanderfolgenden Intervallen für kurze Zelt unterbrochen und hier die Leerlaufspannung gemessen, die mit der für die gewünschte Farbtiefe sich ergebenden Leerlaufspannung verglichen wird. Ist diese erreicht, wird der Färbe- oder Entfärbevorgang unterbrochen. Bei dieser Vorgehensweise kann auf die Kontrolle der geflossenen elektrischen Ladungen verzichtet werden.

Während der Widerstand der transparenten Leitschichten $R_{TCO}$ unter den Betriebsbedingungen eines elektrochromen Elementes weitgehend unverändert bleibt, kann sich der Widerstand des Elektrolyten $R_{Elektrolyt}$ aufgrund von Temperaturänderungen, die bei praktischen Anwendungen zwischen etwa -40 und +90°C liegen können, um mehrere Größenordnungen ändern.

In der erfindungsgemässen Ausführung des Verfahrens zur elektrischen Ansteuerung von elektrochromen Elementen wird deshalb der stark temperaturabhängige Widerstand $R_{Elektrolyt}$ des Ionenleitenden Elektrolyten in bestimmten Zeitintervallen während des Schaltvorganges gemessen. Es wurde nämlich überraschenderweise festgestellt, dass die Ermittlung des Widerstandes R des elektrochromen Elementes sehr einfach durch Messung der Leerlaufspannung des elektrochromen Elementes $U_{Leerlauf}$, Anlegen einer Schaltspannung $U_{Schalt}$ und Messung des dabei fließenden Stromes i sowie anschließender Berechnung nach Gleichung 1 erfolgen kann:

$$R = \left|(U_{Schalt} - U_{Leerlauf})/i\right| \qquad\qquad 1$$

Zur Messung der Leerlaufspannung muss der Schaltvorgang kurzzeitig unterbrochen werden. Diese neue, erfindungsgemäße Methode zur Bestimmung des aktuellen Gesamtwiderstandes der elektrochromen Elemente kann sowohl bei der Färbung als auch bei der Entfärbung durchgeführt werden. Aus diesem ermittelten Gesamtwiderstand und dem nach Gleichung 3 errechneten TCO-Wlderstand lässt sich der Widerstand des Elektrolyten nach Gleichung 2 unter Vernachlässigung der Widerstände der beiden schaltbaren Schichten ($EC_1$ und $EC_2$) berechnen.

Der so bestimmte Elektrolytwiderstand wird zur dynamischen Anpassung der Schaltspannung gemäß Gleichung 6 und 7 verwendet. Bei dieser Verfahrensweise ist eine Messung der Temperatur des elektrochromen Elementes nicht mehr nötig. Ein Vorteil dieses Verfahrens ist es, dass kein Temperatursensor in den Verglasungsbereich integriert werden muss.

Erfindungsgemäß werden die Teilspannungen für die Färbung $U_{1,Färbung}$ und für die Entfärbung $U_{1,Entfärbung}$ so gewählt, dass die elektrochromen Elemente auch bei einem langen Anliegen dieser Spannung nicht geschädigt werden. In der Regel ist diese Forderung erfüllt, wenn die Spannung für die Färbung $U_{1,Farbung}$ betragsmäßig kleiner oder gleich der Leerlaufspannung des voll gefärbten und die Spannung für die Entfärbung $U_{1,Entfärbung}$ betragsmäßig kleiner oder gleich der Leerlaufspannung des voll entfärbten elektrochromen Elementes sind. Auch Spannungen, die wenig oberhalb dieser Leerlaufspannungen liegen, sind zulässig. Die Leerlaufspannungen des voll gefärbten bzw. voll entfärbten Zustandes des elektrochromen Elementes dürfen aber um nicht mehr als den Faktor 1,5 überschritten werden. Die Grösse der Leerlaufspannungen des voll gefärbten und entfärbten Zustandes sind typisch für die konkret gewählten elektrochromen Schichtkombinationen und die verwendeten Elektrolyte und können temperaturabhängig sein.

Der elektrische Widerstand R des elektrochromen Elementes setzt sich, wie in Gleichung 2 angegeben, aus 4 Teilwiderständen zusammen, dem von der Fläche und dem spezifischen Flächenwiderstand der TCO-Schicht abhängigen Widerstand der transparenten Leitschicht $R_{TCO}$, den Widerständen der beiden schaltbaren Schichten ($EC_1$ und $EC_2$) $R_{EC1}$ und $R_{EC2}$ und dem stark temperaturabhängigen Widerstand des Elektrolyten $R_{Elektrolyt}$.

$$R = R_{1CO} + R_{EC1} + R_{EC2} + R_{Elektrolyt} \qquad 2$$

Der Widerstand der transparenten Leitschicht $R_{TCO}$ bleibt in einem elektrochromen Element vorgegebener Geometrie weitgehend unbeeinflusst von den praktisch auftretenden Scheibentemperaturen (etwa zwischen - 40 und + 90°C) und vom Schaltzustand des Elementes. Er kann aus dem Produkt des Flächenwiderstandes $R_{SQ}$ der TCO-Schicht mit dem Kontaktabstand $I_1$ [cm] geteilt durch die Breite $I_2$ [cm] des elektrochromen Elementes berechnet werden (Gleichung 3 ).

$$R_{TCO} = R_{sq} \cdot I_1 / I_2 \qquad 3$$

Überraschenderweise wurde gefunden, dass es für das erfindungsgemäße 3 Verfahren zur elektrischen Ansteuerung elektrochromer Elemente ausreichend ist, die Widerstände der transparenten Leitschicht $R_{TCO}$ und des Elektrolyten $R_{Elektrolyt}$ auszuwerten, da die Widerstände der elektrochromen Schichten $R_{EC1}$ und $R_{EC2}$ in praxisrelevanten elektrochromen Anordnungen (Gebäudeverglasungen, Fahrzeugverglasungen, Autorückspiegel, grossflächige Informationsanzeigen) mit relativ niedrig leitfähigen Elektrolyten und/oder grossen zu schaltenden Flächen klein gegenüber $R_{TCO}$ und $R_{Elektrolyt}$ sind.

Erfindungsgemäß werden daher die dynamischen Teilspannungen für die Färbung $U_{2,Färbung}$ und für die Entfärbung $U_{2,Entfärbung}$ an die Teilwiderstände $R_{Elektrolyt}$ und $R_{TCO}$ und an den bei der Schaltung fliessenden Strom i laufend nach

$$U_{2,Färbung} = i \cdot (a \cdot R_{Elektrolyt} + b \cdot R_{TCO}) \qquad 4$$

bzw.

$$U_{2,Entfärbung} = i \cdot (c \cdot R_{Elektrolyt} + d \cdot R_{TCO}) \qquad 5$$

(mit a, b, c und d ... Konstanten) angepasst, wobei für die Konstanten vorzugsweise die Werte a=1, c=1 sowie b = $^2/_3$ und d=$^2/_3$ verwendet werden. Durch diese dynamische Anpassung der Teilspannung $U_2$ wird eine starke Beschleunigung der Schaltung elektrochromer Elemente möglich, da dadurch Spannungsabfälle, die durch die entsprechenden Widerstände und den fließenden Strom verursacht werden, zumindest teilweise kompensiert werden können.

Die Konstanten a bis d liegen zwischen 0 und 1 und geben an, bis zu welchem Grad der entsprechende Widerstand der transparenten Leitschicht $R_{TCO}$ bzw. des Elektrolyten $R_{Elektrolyt}$ in die Gleichung eingehen. Wenn die Konstanten a und c gleich 1 betragen, wird mit der Berechnung der dynamischen Teilspannung $U_2$ nach Gleichung 4 und 5 der volle Spannungsabfall über den Elektrolyten berücksichtigt. Sind a und c grösser 1 besteht die Gefahr des Anlegens zu hoher wirksamer Spannungen an das elektrochrome Element, was zu Schädigungen und letztlich zur Zerstörung des elektrochromen Elementes führen könnte.

Es hat sich weiterhin gezeigt, dass der Widerstand der TCO-Schicht nicht vollständig kompensiert werden kann (das würde bedeuten: b bzw. d = 1), wenn die wirksamen Spannungen im Randbereich des elektrochromen Elementes nicht zu hoch sein sollen. Nach eigenen Modellberechnungen beträgt der im Dauerbetrieb zulässige Wert für b und d maximal 0,666, da es hier auch bei hohen Schaltzyklenzahlen nicht zu einer Schädigung der elektrochromen Elemente kommt.

Die Gesamtspannung zur Färbung bzw. Entfärbung eines elektrochromen Elementes berechnet sich also nach dem erfindungsgemäßen Verfahren zur elektrischen Ansteuerung von elektrochromen Elementen wie in Gleichung 6 und 7 angegeben:

$$U_{Schalt,Färbung} = U_{1,Färbung} + i \cdot (a \cdot R_{Elektrolyt} + b \cdot R_{TCO}) \qquad 6$$

bzw.

$$U_{Schalt,Entfärbung} = U_{1, Entfärbung} + i \cdot (c \cdot R_{Elektrolyt} + d \cdot R_{TCO}) \qquad \underline{7}$$

Bei Beginn eines solchen erfindungsgemäßen Schaltvorganges wird an das elektrochrome Element die Teilspannung $U_{1, Färbung}$ bzw. beim Entfärben $U_{1, Entfärbung}$ angelegt. Der dann fliessende Strom i wird gemessen und die neue anzulegende Spannung $U_{Schalt,Färbung}$ bzw. $U_{Schalt,Entfärbung}$ nach den oben angegebenen Gleichungen $\underline{6}$ bzw. $\underline{7}$ berechnet und an das Element angelegt. Dann erfolgt wiederum Messung des Stroms, Berechnung und Anlegen der neuen Schaltspannung. Diese Vorgänge werden solange wiederholt, bis die gewünschte Färbungstiefe erreicht ist. Erfindungsgemäß betragen die Zeitintervalle für die Anpassung der Ansteuerspannung vorzugsweise zwischen 10 Millisekunden und 5 Sekunden.

Über eine längere Zeitdauer des Betriebes eines elektrochromen Elementes kann es durch Kriechströme und/ oder im Polymerelektrolyten vorhandene Spuren von Oxidations- und/oder Reduktionsmitteln zu einer Beeinflussung des Ladezustandes unabhängig von den kontrollierten Ladungsmengen kommen. Um das elektrochrome Element wieder in einen definierten, kontrollierbaren Ausgangszustand zu bringen, erfolgt deshalb in einer erfindungsgemäßen Ausführungsvariante in bestimmten größeren Zeitabständen, welche vorzugsweise zwischen 1 Stunde und 3 Monaten betragen können, eine Tiefentfärbung bzw. Tiefentladung des Elementes. Zu diesem Zweck wird für einen Zeitabschnitt, der zwischen 5 Minuten und 2 Stunden liegen kann, eine Entfärbespannung angelegt, die betragsmässig um 0,3 bis 2,4 V über der Leerlaufspannung des voll entfärbten elektrochromen Elementes liegt. Das kann, um die Funktionsfähigkeit der Elemente am Tag nicht zu beeinträchtigen, zum Beispiel in den oben genannten Zeitabständen nachts geschehen, wenn die Schaltfunktion des elektrochromen Elementes ohnehin nicht genutzt wird.

Ausführungsbeispiel

Ein elektrochromes Element der Struktur:

Glas / FTO / Wolframoxid / ionenleitende PVB-Folie / Preußisch Blau / FTO / Glas mit einer aktiven Schaltfläche von 30 cm x 8,5 cm wurde, wie in EP1227362 beschrieben, hergestellt und abgedichtet. Die Ionenleitfähigkeit der ionenleitenden PVB-Folie (PVB ... Polyvinylbutyral) betrug etwa $7 \cdot 10^{-6}$ S/cm, der Flächenwiderstand der FTO-Schichten ca. 18 $\Omega$/sq. Die Kombination Glas/FTO ist handelsübliches K-Glas der Fa. Pilkington (FTO ist eine transparente leitfähige Schicht und steht für Fluor-dotiertes Zinndioxid). Nach der Herstellung des Elementes erfolgte die Grundentfärbung durch Anlegen einer Gleichspannung von 2,4 V für 2 Stunden, wobei das Preußisch Blau als Minuspol und das Wolframoxid als Pluspol geschaltet wurden. Nach Ende der Grundentfärbung wurde die Leerlaufspannung des entfärbten Zustandes bestimmt. Sie betrug -720 mV. Danach wurde das elektrochrome Element durch Anlegen einer Spannung von 1,4 V (Wolframoxid: Minuspol, Preußisch Blau: Pluspol) gefärbt. Nach dem eine Ladungsmenge von 15 mC/cm$^2$ geflossen war, wurde der Färbevorgang beendet und die Leerlaufspannung des gefärbten Zustandes bestimmt. Sie betrug +1100 mV.

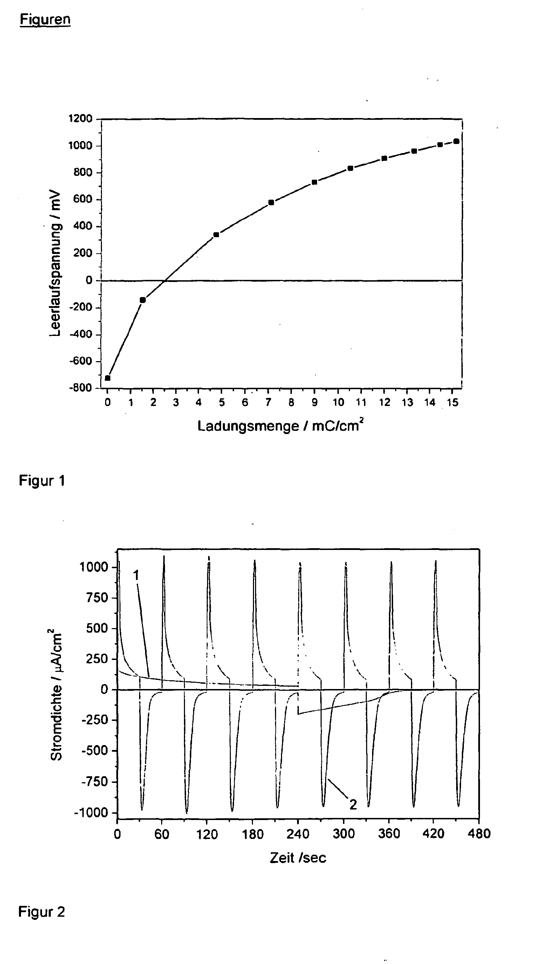

Danach wurde der Zusammenhang zwischen injizierter Ladungsmenge und Leerlaufspannung ermittelt. Dazu wurde das voll gefärbte elektrochrome Element durch dreiminütiges Anlegen einer Gleichspannung von 1,4 V (Wolframoxid: Pluspol, Preußisch Blau: Minuspol) entfärbt. Danach wurde das Element durch Anlegen von 1,4 V umgekehrter Polarität wieder schrittweise gefärbt und zwischenzeitlich die Leerlaufspannung gemessen und die geflossenen Ladungen pro Fläche berechnet. Der so bestimmte Zusammenhang zwischen injizierten Ladungen und Leerlaufspannung ist in Figur 1 dargestellt. Man erkennt, dass dieser Zusammenhang zur Bewertung und Kontrolle der Menge der injizierten Ladungen und damit der Färbungstiefe eines elektrochromen Elementes genutzt werden kann.

Dieses elektrochrome Element wurde danach einmal mit Konstantspannung nach dem Stand der Technik und danach mit der erfindungsgemäßen kontinuierlichen Anpassung der Schaltspannung geschaltet und dabei jeweils die Stromdichte-Zeit-Kennlinie aufgenommen. Beide Kennlinien sind in Figur 2 dargestellt. Mit 1 ist hier die Stromdichte-Zeit-Kennlinie bei Färbung und Entfärbung mit $\pm 1,4$ V und mit 2 ist die Kennlinie bei Schaltung mit kontinuierlichen Anpassung der Schaltspannung mit den oben ermittelten Leerlaufspannungen ($U_{1,Entfärbung}$ = -720 mV, $U_{1,Färbung}$ = +1,1 V) und Werten für ($a \cdot R_{Elektrolyt}$ + $b \cdot R_{TCO}$) und ($c \cdot R_{Elektrolyt}$ + $d \cdot R_{TCO}$) von jeweils 40 Ohm dargestellt. Kurve 1 zeigt den Stromdichte-Zeit-Verlauf für eine Färbung und eine Entfärbung innerhalb der dargestellten Zeit von 480 Sekunden. In der gleichen Zeit erfolgen bei dynamischer Anpassung der Schaltspannung 8 Färbe- und Entfärbezyklen (Kurve 2). Die schnellere Schaltung bei dem erfindungsgemäßen Verfahren ist auch an der höheren Stromdichte und an der pro Zeit geschalteten Ladung zu erkennen. Mittels der kontinuierlichen Anpassung der Schaltspannung wird in 30 Sekunden in etwa soviel Ladung pro Fläche geschaltet wie bei Konstantspannungsschaltung in 4 Minuten.

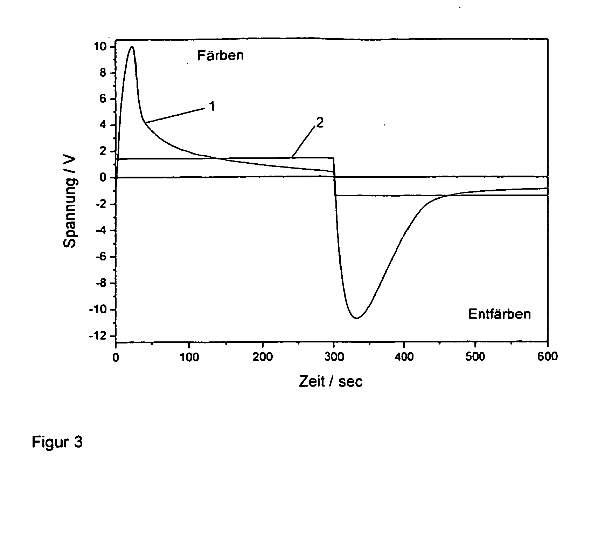

Figur 3 zeigt den zeitlichen Verlauf der Schaltspannung für eine Schaltung nach dem Stand der Technik mit Konstantspannung (hier $\pm 1,4$ V, Kurve 2) und für die erfindungsgemässe Schaltung mit kontinuierlicher Anpassung der Schaltspannung an den Widerstand und den fließenden Strom (Kurve 1). Im Bereich hoher Stromdichten werden auch hohe Schaltspannungen von ca. 12 V erreicht, die aber nicht schädlich auf das elektrochrome Element wirken. Gegen Ende einer Schaltung sind die anliegenden Spannungen bei dem erfindungsgemäßen Verfahren sogar kleiner, als bei der Konstantspannungsschaltung, so dass das elektrochrome Element insgesamt schonender geschaltet wird.

## Patentansprüche

1. Verfahren zur elektrischen Ansteuerung von elektrochromen Elementen, wobei

   - sich die Gleichspannung zur Färbung $U_{Schalt,Färbung}$ und die Gleichspannung zur Entfärbung $U_{Schalt,Entfärbung}$ des Elementes jeweils aus zwei Teilspannungen $U_1$ und $U_2$ zusammensetzen, wobei die Teilspannung $U_2$ dynamisch an den bei der Schaltung fliessenden Strom i und an den elektrischen Widerstand des elektrochromen Elementes R angepasst wird, und
   - der Grad der Färbung des elektrochromen Elementes über die Messung der Leerlaufspannung $U_{Leerlauf}$ des elektrochromen Elementes bestimmt wird, charakterisiert **dadurch**,
   - dass der elektrische Widerstand des elektrochromen Elementes R durch Messung der Leerlaufspannung des elektrochromen Elementes $U_{Leerlauf}$, Anlegen einer Schaltspannung $U_{Schalt}$ und Messung des dabei fliessenden Stromes i, sowie anschliessender Berechnung nach

$$R = \left| (U_{Schalt} - U_{Leerlauf})/i \right|$$

   - in bestimmten Zeitintervallen während des Schaltvorganges ermittelt wird.

2. Verfahren zur elektrischen Ansteuerung von elektrochromen Elementen nach Anspruch 1, **dadurch gekennzeichnet, dass** die Teilspannungen für die Färbung $U_{1,Färbung}$ und für die Entfärbung $U_{1,Entfärbung}$ so gewählt werden, dass sie die Leerlaufspannungen des voll gefärbten bzw. voll entfärbten Zustandes des elektrochromen Elementes um nicht mehr als den Faktor 1,5 überschreiten.

3. Verfahren zur elektrischen Ansteuerung von elektrochromen Elementen nach Anspruch 1, **dadurch gekennzeichnet, dass** die dynamischen Teilspannungen für die Färbung $U_{2,Färbung}$ und für die Entfärbung $U_{2,Entfärbung}$ an die beiden Teilwiderstände $R_{Elektrolyt}$ des Elektrolyten und $R_{TCO}$ der transparenten Leitschicht (TCO) und den bei der Schaltung fliessenden Stromes i laufend nach

$$U_{2,Färbung} = i \cdot (a \cdot R_{Elektrolyt} + b \cdot R_{TCO})$$

bzw.

$$U_{2,Entfärbung} = i \cdot (c \cdot R_{Elektrolyt} + d \cdot R_{TCO}),$$

mit a, b, c und d ... Konstanten, angepasst werden, wobei für die Konstanten vorzugsweise die Werte a und c gleich 1 und b und d gleich $^2/_3$ verwendet werden.

4. Verfahren zur elektrischen Ansteuerung von elektrochromen Elementen nach Anspruch 1 und 3, **dadurch gekennzeichnet, dass** die Anpassung der Ansteuerspannung in Zeitintervallen zwischen 10 Millisekunden und 5 Sekunden erfolgt.

5. Verfahren zur elektrischen Ansteuerung von elektrochromen Elementen nach Anspruch 1, **dadurch gekennzeichnet, dass** in bestimmten Zeitintervallen, welche zwischen 1 Stunde und 3 Monaten betragen können, eine Tiefentladung des Elementes durchgeführt wird.

## Claims

1. A method for the electrical control of electrochromic elements, wherein

- the DC voltage for the colouration $U_{Switch,colorouration}$ and the DC voltage for the de-colouration $U_{Switch,de-colouration}$ of the element in each case are composed of two sub-voltages $U_1$ and $U_2$, wherein the sub-voltage $U_2$ is dynamically adapted to the current i flowing through the circuit and to the electrical resistance of the electrochromic element R, and
- the degree of colouration of the electrochromic element is determined via the measurement of the open-circuit voltage $U_{open-circuit}$ of the electrochromic element, **characterised in that**
- the electrical resistance of the electrochromic element R is determined by measurement of the open-circuit voltage of the electrochromic element $U_{open-circuit}$, application of a switching voltage $U_{Switch}$ and measurement of the current i flowing as a result, as well as subsequent analysis by means of:

$$R = \left| (U_{Switch} - U_{open-circuit})/i \right|$$

at time intervals determined during the switching process.

2. The method for the electrical control of electrochromic elements according to Claim 1, **characterised in that** the sub-voltages for the colouration $U_{1,colouration}$ and for the de-colouration $U_{1,de-colouration}$ are chosen such that they do not exceed the open-circuit voltages of the fully coloured or fully de-coloured state of the electrochromic element by more than the factor 1.5.

3. The method for the electrical control of electrochromic elements according to Claim 1, **characterised in that** the dynamic sub-voltages for the colouration $U_{2,colouration}$ and for the de-colouration $U_{2,de-colouration}$ at the two sub resistances $R_{electrolyte}$ of the electrolyte and $R_{TCO}$ of the transparent conducting layer and the current i flowing through the circuit, related by:

$$U_{2,colouration} = i \cdot (a \cdot R_{electrolyte} + b \cdot R_{TCO})$$

and

$$U_{2,de-colouration} = i \cdot (c \cdot R_{electrolyte} + d \cdot R_{TCO})$$

are adapted using the constants a, b, c and d ... , wherein values of a and c equal to 1, and b and d equal to 2/3, are preferably used for the constants.

4. The method for the electrical control of electrochromic elements according to Claims 1 and 3, **characterised in that** the adaptation of the control voltage takes place at time intervals between 10 milliseconds and 5 seconds.

5. The method for the electrical control of electrochromic elements according to Claim 1, **characterised in that** a deep discharge of the element is carried out at time intervals that can be between 1 hour and 3 months.

**Revendications**

1. Procédé pour l'activation électrique d'éléments électrochromes,

- la tension continue pour la coloration $U_{commutation,coloration}$ et la tension continue pour la décoloration $U_{commutation,décoloration}$ de l'élément se composant de deux tensions partielles $U_1$ et $U_2$, la tension partielle $U_2$ étant adaptée de façon dynamique au courant i circulant dans le circuit et à la résistance électrique de l'élément R électrochrome, et
- le degré de coloration de l'élément électrochrome étant déterminé par la mesure de la tension au ralenti $U_{oc}$ de l'élément électrochrome, **caractérisé en ce que**
- la résistance électrique de l'élément électrochrome R est déterminée par la mesure de la tension au ralenti de l'élément électrochrome $U_{oc}$, l'application d'une tension de commutation $U_{commutation}$ et par la mesure du courant i circulant alors, suivie d'un calcul selon la formule suivante

$$R = |(U_{commutation} - U_{OC})/i|$$

à certains intervalles de temps pendant l'opération de commutation.

2.  Procédé pour l'activation électrique d'éléments électrochromes selon la revendication 1, **caractérisé en ce que** les tensions partielles pour la coloration $U_{1,coloration}$ et pour la décoloration $U_{1,décoloration}$ sont choisies de telle sorte que les tensions au ralenti de l'état complètement coloré ou décoloré de l'élément électrochrome ne dépassent pas de plus du facteur 1,5.

3.  Procédé pour l'activation électrique d'éléments électrochromes selon la revendication 1, **caractérisé en ce que** les tensions partielles dynamiques pour la coloration $U_{2,coloration}$ et pour la décoloration $U_{2,décoloration}$ sont adaptées aux deux résistances partielles $R_{electrolyte}$ de l'électrolyte et $R_{TCO}$ de la couche directrice transparente et du courant i circulant dans le circuit selon la formule suivante

$$U_{2,coloration} = i \cdot (a \cdot R_{electrolyte} + b \cdot R_{TCO})$$

ou

$$U_{2,décoloration} = i \cdot (c \cdot R_{electrolyte} + d \cdot R_{TCO})$$

avec a, b, c et d ... constantes, les valeurs a et c égales à 1 et b et d égales à 2/3 étant utilisées de préférence pour les constantes.

4.  Procédé pour l'activation électrique d'éléments électrochromes selon les revendications 1 et 3, **caractérisé en ce que** l'adaptation de la tension d'activation s'effectue à des intervalles de temps compris entre 10 millisecondes et 5 secondes.

5.  Procédé pour l'activation électrique d'éléments électrochromes selon la revendication 1, **caractérisé en ce qu'** une décharge totale de l'élément est effectuée à certains intervalles de temps qui peuvent se situer entre une heure et trois mois.

## Figuren

Figur 1

Figur 2

Figur 3

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1227362 A
- WO 0240578 A
- EP 78464 A
- DE 3142909
- WO 0217008 A
- EP 445720 A
- US 5124833 A
- DE 19706918
- DE 19839748